# EUROPEAN PATENT SPECIFICATION

(11) **EP 2 249 524 B1**
(45) Date of publication and mention of the grant of the patent: **29.02.2012**
(21) Application number: 09305394.0
(22) Date of filing: 04.05.2009
(51) Int. Cl.: H04L 12/56, H04L 12/46

(54) **Method for controlling admission and assigning resources to data flows, without a priori knowledge, in a virtual network**
Verfahren zur Steuerung der Zulassung und Zuteilung von Ressourcen an Datenströme ohne a priori Wissen in einem virtuellen Netz
Procédé de contrôle de l'admission et de l'attribution de ressources à des flux de données sans connaissances préalables dans un réseau virtuel

(43) Date of publication of application: 10.11.2010
(73) Proprietor: Alcatel Lucent, 75007 Paris (FR)
(72) Inventor: Popa, Daniel, 92240, MALAKOFF (FR); Carofiglio, Giovanna, 75005, PARIS (FR)
(74) Representative: Nicolle, Olivier

(56) References cited:
- EP-A- 1 035 751
- WO-A-2008/005680
- US-A1- 2001 007 560

## Description

The technical domain of the invention is the domain of communication networks, and particularly autonomic, self-managed and virtualized networks. The invention concerns traffic control at the edge or border nodes of a network, and addresses network operations defined on a flow granularity level rather than on a packet level. A flow is a sequence of packets related by the same characteristics in term of Quality of Service, QoS, that is, of delay constraint or bandwidth/throughput constraint. A flow is characterized by a source address, a destination address, a source port, a destination port, a protocol and a temporal correlation. At a given time, packets sharing all of these parameters pertain to the same flow. Based on these parameters it is then possible to separate the flows. Such flows are also disclosed in documents US-A1-2001/007560 and WO-A2-2008/005680.

Telecommunication networks evolve toward autonomic, self-managed and virtualized infrastructures. Such "next generation" of data communication networks requires a rethinking of some network functionalities among which is traffic control at the user-to-network interface. It is worth observing that network operations such as traffic control are advantageously defined on a flow granularity, as the flow replaces the packet and becomes the base unit of next generation networks.

Inside an autonomic and self-managed data communications system, one can not rely on a priori knowledge about an incoming traffic flow. That is, such a system works without explicit user-to-network signaling.

Within a virtualized network environment, link and node resources are virtualized so as to create customized virtual networks, VN, for classes of application characterized by specific QoS constraints.

In such a context, traffic controlling must be done per class of service, or equivalently, per virtual network.

Controlling unknown or undeclared traffic flows, that is flows whose no a priori information is known, is extremely challenging for admission control and resource assignment because they do not have any a priori information about the nature of a flow (e.g.: characteristics, type of application).

"On the fly" traffic identification and classification procedures are known and may be deployed at the user-to-network interface, that is, at a border node of the network, in order to characterize incoming flows. Fast traffic classification approaches typically require an analysis of first N packets with N being equal to approximately 4 to 10 packets, from a flow. One possible principle for traffic classification is, after separating the flows, e.g. to measure the size of the first packets of a flow. Since said first packets contains protocols information related to the flow, their size is indicative of the application of the flow, and the application indicates the class. See e.g.: L.Bernaille, R.Texeira, K.Salamatian, "Early application identification", in Proc. of ACM CoNext 2006.

The flow control issue of undeclared traffic flows in data communication systems with virtualized resources raises problems that can be split into two levels.

At Admission Control level: the admission control is in charge of deciding whether to accept or reject a flow. A first problem occurs for the admission control of the first N packets from a flow when said flow is not yet identified and classified. A second problem occurs for the admission control of the N+1^{th} and following packets of said flow, when the classification of the flow has been determined.

At Resource Assignment level: the resource assignment is in charge of assigning resources for the transmission of an accepted flow. A problem occurs due to the fact that resources must be assigned to an incoming new flow before knowing the characteristics of said flow.

Several prior art works exist about optimal flow control. See e.g.:
- P.Key, L.Massoulié, "Control of communication networks: welfare maximization and multipath transfers", in Philosophical Transactions of the Royal Society, 366(1872), 2008,
- P.Key, L.Massoulié, D.Towsley, "Path Selection and Multipath Congestion Control", in Proc. of INFOCOM 2007, or
- M.Chiang, S.H.Low, A.R.Calderbank, J.C.Doyle, "Layering as optimization decomposition: A mathematical theory of network architectures", in Proc. of IEEE, vol. 95, no. 1, pp. 255-312, January 2007.

Some prior art works even benefit of network virtualization. See e.g.:
- M.Yu, Y.Yi, J.Rexford, and M.Chiang, "Rethinking virtual network embedding: Substrate support for path splitting and migration", in Proc. of ACM SIGCOMM Computer Communications Review, April 2008, available at http://www.cs.princeton.edu/~jrex/papers/VNembed.pdf,
- Y.Zhu, M.Ammar, "Algorithms for assigning substrate network resources to virtual network components", in Proc. of INFOCOM 2006.

However, all of these studies lie on an explicit characterization of flow and hence on an a priori knowledge of flow classes. Consequently they can not be adapted to accommodate online classification of undeclared flows.

One existing solution to realize admission control and resource assignment with on line classification of flows consists in storing the first N packets from a flow until the classification procedure ends, i.e., until the N first packets are received. However, although this solution represents a good way to "protect" the network against wrong decisions, it exhibits several problems which make it unsuitable for practical implementations. Some of the most important problems are that the storage of the first N packets from a flow before releasing them into the network:
- adds supplementary delay and delay variation, particularly for constant bit rate and low bit-rate flows. This problem can be critical for delay-sensitive applications, such as VoIP, which generate low bit-rate flows,
- makes the system non-work conserving and thus resources can be wasted,
- changes the traffic profile: such method increases the traffic burstiness, or even worse, makes traffic bursty. This can lead to congestion in the core of the network. The explanation is very simple and intuitive: imagine a couple of border routers interconnected via a core router. Two admission controls at border routers can get "synchronized" in the sense they release at the same time bursts of N packets to the core router.

Online classification is an important issue towards autonomic networks. Consequently, a flow control including and adapted to online classification is an important issue to solve in an autonomic network, which self-adapts to incoming undeclared flows.

The technical problem to be solved here is to design a flow control procedure in a self-managed data communication system with virtualized resources and multiple classes of services, where the user-to-network interface has no a priori knowledge about the characteristics of new incoming traffic flows.

The present invention addresses and solves this problem.

The object of the invention is a method for controlling admission and assigning resource to incoming traffic flows, without any a priori knowledge about the incoming traffic flow, in a data communication network virtualized so as to comprise customized virtual networks each dedicated to at least one specific QoS class, comprising one super virtual network dedicated to the class with the strictest QoS constraints, and at least one other virtual network, comprising the steps of:
- at arrival of a flow, intended to be carried between an ingress node and an egress node, determining a first path from said ingress node to said egress node over said super virtual network,
- determining a QoS class of said flow by analyzing the first N packets of said flow,
- transmitting said first N packets of said flow over said first path across said super virtual network,
- determining a virtual network dedicated to said determined QoS class of said flow,
- determining a second path from said ingress node to said egress node over said determined virtual network if said determined virtual network differs from the super virtual network, or
- determining a second path equal to the first path if said determined virtual network is equal to the super virtual network,
- transmitting the packets of said flow, from the N+1^{th} packet, over said second path.

According to another feature of the invention, the step of determining a first path comprises a step of checking availability of said first path to transmit the first N packets.

According to another feature of the invention, the steps after the step of determining a first path are replaced by a step of rejecting said flow if availability is not checked. According to another feature of the invention, the step of determining a second path comprises a step of checking availability of said second path to transmit the packets of said flow, from the N+1^{th} packet.

According to another feature of the invention, the steps after the step of determining a second path are replaced by a step of rejecting said flow if availability is not checked.

According to another feature of the invention, if availability is not checked in the step of determining a second path, replacing said step by a step of determining a second path over another virtual network.

According to another feature of the invention, said another virtual network is a virtual network dedicated to a class with lesser strict QoS constraints.

According to another feature of the invention, the checking of availability is exact or probabilistic.

According to another feature of the invention, the steps after the transmitting over said first path step are stopped or cancelled when the flow ends.

Others features, details and advantages of the invention will become more apparent from the detailed illustrating description given hereafter with respect to the drawings on which:

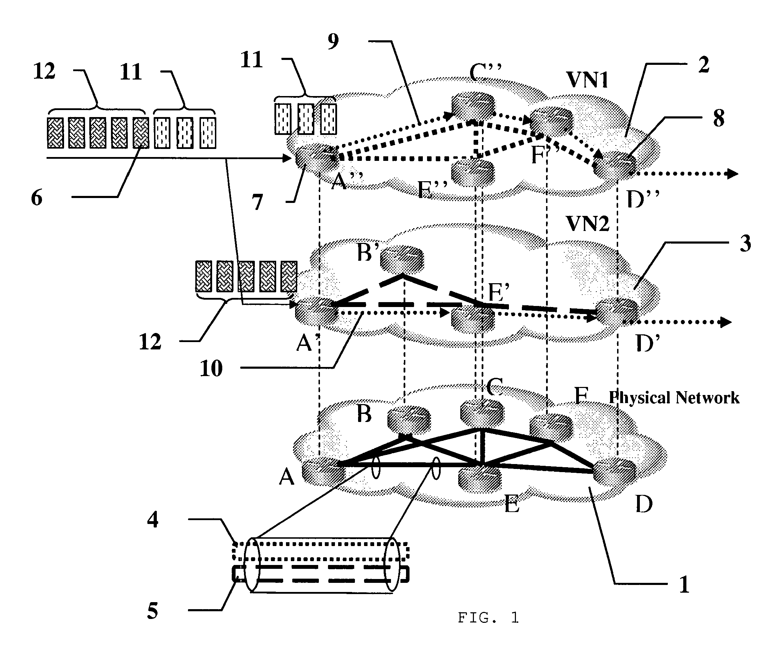

- figure 1 is a schematic view of a virtualized network comprising two virtual networks, while transmitting a undeclared flow.

According to figure 1, is represented a physical network 1. Said network 1 illustratively comprises six nodes A-F. Over said physical network 1 are deployed at least two virtual networks 2, 3, using partly or wholly the physical nodes and links. Here, e.g. two virtual networks 2, 3 are shown. A first virtual network 2, VN1, comprises the virtual nodes A", C", D", E" and F" respectively implemented over physical nodes A, C, D, E, and F. A second virtual network 3, VN2, comprises the virtual nodes A', B', D' and E' respectively implemented over physical node A, B, D and E. The virtual links are implemented over the physical links. Sometimes several virtual links may share one physical link. For instance physic al link A-E is shared between virtual links A"-E", 4 and virtual link A'-E', 5, as shown in zoomed detail at the bottom of the figure.

Each virtual network 2, 3, may then be dedicated to at least one specific QoS class. The plurality of virtual networks comprises one super virtual network, 2, dedicated to the class with the strictest QoS constraints. Beside said super VN, may be found several other virtual networks, 3.

Let us consider, for the purpose of illustrating the invention, that VN1, 2, is the super virtual network, and VN2, 3 is one other virtual network, 3, dedicated to another QoS class. For example, the super virtual network 2 may be optimized for delay sensitive application, while the other virtual network 3 may be optimized for throughput sensitive applications. This way of resource virtualization simply means that the topology and the bandwidth assignment to virtual links are the result of the multi-path routing optimization of the network using as utility function the delay, for VN1, and the bandwidth utilization, i.e. throughput, for VN2. It is worth noticing that delay-sensitive and throughput-sensitive applications belong to different QoS classes. Also, there can clearly be more than two virtual networks.

The method according to the invention is concerned by the problem of controlling admission and assigning resource to incoming traffic flows 6. Most prior art admission controller and/or resource assigner are based on a priori information about the flow 6. Generally, information about a flow 6 is provided by the user/sender of the flow 6. This necessitates an introduction of said information into the network management system and most of all it necessitates signalling between said user and the node in charge of admission control/resource allocation, that is, a border node 7 of the network, by which the flow 6 enter said network. One important feature of the invention is that, in order to provide autonomous self managed network managed system, the signalling is avoided and instead the information about an incoming flow 6 is automatically obtained from an analysis of the flow "on-the-fly", at arrival at the border node 7. Any a priori knowledge is then replaced by on line automatically gathered information.

The main idea of the invention is to temporarily accept an incoming flow 6 before its classification. The classification needs to analyze the first N packets 11 of the incoming flow 6. While the class of the flow 6 is not known, that is, until the arrival of the N^{th} packet, the flow 6 must by default be considered to pertain to the highest priority class. Hence the flow 6 is, at the beginning, considered to be of the highest priority and transmitted as such over the virtual network dedicated to the highest priority class, that is the super virtual network 2. After the class of the flow 6 has been determined, a rerouting may be done in order to treat the flow 6 according to its real class.

To realize said idea, the method comprises the following steps.

When a flow 6 intended to be carried between an ingress node 7 and an egress node 8, arrives, it is first allocated a highest priority. A first path 9 from said ingress node 7 to said egress node 8 is then determined. Since the priority is at its highest level, said first path 9 is determined over said super virtual network 2, dedicated to the highest priority.

As the first packets 11 of said flow 6 arrive, said first packets 11 are analyzed in order to determine their application and consequently the corresponding QoS class of said flow 6. A given number N of packets is needed in order to determine said QoS class. N is typically comprised, in the best processes, between 4 and 10.

In parallel, until the class is determined, that is until the N^{th} packet arrives, the priority is still considered to be the highest, corresponding to the strictest QoS constraints. So, the first N packets 11 of said flow 6 are transmitted over said previously determined first path 9 across said super virtual network 2.

In a preferred embodiment, in order not to delay the transmission of a packet, that could modify the profile of the flow 6, both preceding steps are interleaved. In others words, each packet arrives, is analyzed or copied for analysis purpose, and is transmitted, in a row. So doing, the processing time is the same for each packet.

However the analyzing time can be neglected with respect to the whole processing.

Based on the determined QoS class of said flow 6, a virtual network 3 dedicated to said determined QoS class of said flow 6 can be determined.

Two cases can then occur. First, the virtual network 3 differs from the super virtual network 2. A second path 10 from said ingress node 7 to said egress node 8 over said determined virtual network 3 can then be determined. A rerouting can then be applied in order to alleviate the super virtual network.

Second, the virtual network 3 is determined to be the same as the super virtual network 2. That is, the flow 6 effectively pertains to the QoS class corresponding to the strictest QoS constraints. In that case the transmission may carry on over said super virtual network 2. The second path 10 can then be taken equal to the first path 9.

The remainder of the packets 12 of said flow 6, from the N+1^{th} packet, can then be transmitted over said second path 10.

Since the admission control and resource allocation are done in two successive steps, availability checks may also be applied in two steps, at determination of respectively the first path 9 and the second path 10.

While determining a first path 9, an availability check can be apply, so that said first path 9 possesses enough resources to be able to transmit, at least, the first N packets 11.

If said first availability can not be checked, that is, if no path can be found between ingress node 7 and egress node 8 able to transmit the first N packets 11 of the flow 6 over said super virtual network 2, the method ends with a step of rejecting the incoming flow 6. In other words, the last steps, that is, the steps after the step of determining a first path 9 are replaced by a rejecting step.

While determining a second path 10, an availability check can be apply, so that said second path 10 possesses enough resources to be able to transmit the remainder packets 12 starting with the N+1^{th}, over the newly determined virtual network 3.

If said second availability can not be checked, that is, if no path can be found between ingress node 7 and egress node 8 able to transmit the remainder packets 12 starting with the N+1^{th} of the flow 6 over said newly determined virtual network 3, the method ends with a step of rejecting the incoming flow 6. In other words, the last steps, that is, the steps after the step of determining a second path 10 are replaced by a rejecting step.

Alternately, if availability is not checked in the step of determining a second path 10, a new try can be done over another virtual network. In other words, the method iterates over several virtual networks in order to determine a second path 10 providing availability.

Preferentially, said new trial is applied over a virtual network dedicated to a class with lesser strict QoS constraints. The method may then iterate over a list of virtual networks, ordered in decreasing strictness of QoS constraints until one virtual network is available. Else, if no virtual network can provide an available path, the flow 6 may be rejected, in fine.

Each of the several availability checks used in the previous embodiments may be done exactly. That is, the availability is checked if and only the exact needed resources to accommodate the flow 6 will be available when and where needed.

Each of the several availability checks used in the previous embodiments may also be done in a probabilistic way. That is, the availability is checked if the needed resources to accommodate the flow 6 show a probability to be available when needed greater than a given acceptance probability.

It is obvious to the one skilled in the art that the steps after the transmitting over said first path step are stopped or cancelled when the flow 6 ends.

It is also obvious that, after the processing of the first N packets 11, the method ends its action on the flow. This is an advantage of the method.

When a flow 6 contains less than N packets, the method is also shortened.

For said shorts flows also called mice, it may be noted that two cases may occur:
- the flow 6 belongs to the highest class of traffic: the method is right as the flow 6 has been correctly considered and transmitted as part of that class;
- the flow 6 does not belong to the highest class of traffic: in this case the short flow has been treated by the method as a "king", even if it was not the case.

However, recent traffic investigation has shown that small traffic flows or mice (e.g., few tens of packets) represent the majority of traffic flows circulating in network such as e.g. the Internet. Yet, they consume a percent of significantly smaller bandwidth than the total volume of Internet traffic. This means that the big flows, or elephants, consume the majority of total bandwidth, and additionally, represent a small number of traffic flows.

In this context, treating short flows as "kings", has a minor impact on the QoS guarantees of other types of traffic flows. In addition, the one skilled in the art will appreciate that small flows usually represent control messages which must be delivered with a low-latency to their destination.

Another advantage of the method according to the invention is its scalability. Said scalability may be inferred from the facts that only the border routers at the edges of a network have admission control mechanisms, and said mechanisms only operate on the first N packets 11 from a flow 6. Once the flow 6 has been identified and classified, the admission control does not need to keep any state information on accepted flows and only focuses on new arriving flows.

It is also obvious that the re-routing of a flow 6 from the super virtual network 2 to another virtual network 3 does not interfere with the packet sequence inside a flow 6. The one skilled in the art of traffic splitting, will appreciate that there exist several traffic splitting approaches which guarantee the packet sequence of flow, when the flow 6 is split or routed/re-routed among multiple paths.

On this subject one may e.g. refer to the document: Jiayue He and Jennifer Rexford, "Towards Internet-wide multipath routing", in IEEE Network Magazine, March 2008.

## Claims

1. A method for controlling admission and assigning resource to incoming traffic flows, without any a priori knowledge about the incoming traffic flow, in a data communication network (1) virtualized so as to comprise customized virtual networks (2, 3) each dedicated to at least one specific QoS class, comprising one super virtual network (2) dedicated to the class with the strictest QoS constraints, and at least one other virtual network (3), said method comprising the steps of:
- at arrival of a flow (6), intended to be carried between an ingress node (7) and an egress node (8), determining a first path (9) from said ingress node (7) to said egress node (8) over said super virtual network (2),
- determining a QoS class of said flow (6) by analyzing the first N packets (11) of said flow (6),
- transmitting said first N packets (11) of said flow (6) over said first path (9) across said super virtual network (2),
- determining a virtual network (3) dedicated to said determined QoS class of said flow (6),
- determining a second path (10) from said ingress node (7) to said egress node (8) over said determined virtual network (3) if said determined virtual network (3) differs from the super virtual network (2), or
- determining a second path (10) equal to the first path (9) if said determined virtual network (3) is equal to the super virtual network (2),
- transmitting the packets (12) of said flow (6), from the N+1^{th} packet, over said second path (10).

2. The method of claim 1, wherein the step of determining a first path (9) comprises a step of checking availability of said first path (9) to transmit the first N packets (11).

3. The method of claim 2, wherein the steps after the step of determining a first path (9) are replaced by a step of rejecting said flow (6) if availability is not checked.

4. The method of any one of claims 1 to 3, wherein the step of determining a second path (10) comprises a step of checking availability of said second path (10) to transmit the packets (12) of said flow (6), from the N+1^{th} packet.

5. The method of claim 4, wherein the steps after the step of determining a second path (10) are replaced by a step of rejecting said flow (6) if availability is not checked.

6. The method of claim 4, wherein if availability is not checked in the step of determining a second path (10), replacing said step by a step of determining a second path (10) over another virtual network.

7. The method of claim 6, wherein said another virtual network is a virtual network dedicated to a class with lesser strict QoS constraints.

8. The method of any one of claims 2 to 7, wherein the checking of availability is exact or probabilistic.

9. The method of any one of claims 1 to 8 where the steps after the transmitting over said first path step are stopped or cancelled when the flow (6) ends.

## Patentansprüche

1. Verfahren zur Steuerung der Zulassung und zur Zuweisung von Ressourcen an eingehende Verkehrsflüsse, ohne jegliches a priori-Wissen über den eingehenden Verkehrsfluss, in einem Datenkommunikationsnetzwerk (1), welches derart virtualisiert ist, dass es benutzerdefinierte virtuelle Netzwerke (2, 3) umfasst, die jeweils mindestens einer spezifischen QoS-Klasse zugeordnet sind, umfassend ein virtuelles Supernetzwerk (2), welches der Klasse mit den strengsten QoS-Constraints zugeordnet ist, und mindestens ein anderes virtuelles Netzwerk (3), ***wobei das besagte Verfahren*** die folgenden Schritte ***umfasst**:*
- Bei Ankunft eines Flusses (6), welcher für den Transport zwischen einem Eingangsknoten (7) und einem Ausgangsknoten (8) bestimmt ist, Bestimmen eines ersten Pfads (9) von dem besagten Eingangsknoten (7) zu dem besagten Ausgangsknoten (8) über das besagte virtuelle Supernetzwerk (2),
- Ermitteln einer QoS-Klasse aus dem besagten Fluss (6) durch Analysieren der ersten N Pakete (11) des besagten Flusses (6),
- Übertragen der besagten ersten N Pakete (11) des besagten Flusses (6) über den besagten ersten Pfad (9) durch das besagte virtuelle Supernetzwerk (2),
- Bestimmen eines der besagten bestimmten QoS-Klasse des besagten Flusses (6) zugeordneten virtuellen Netzwerks (3),
- Bestimmen eines zweiten Pfads (10) von dem besagten Eingangsknoten (7) zu dem besagten Ausgangsknoten (8) über das besagte bestimmte virtuelle Netzwerk (3), wenn sich das besagte bestimmte virtuelle Netzwerk (3) von dem virtuellen Supernetzwerk (2) unterscheidet, oder
- Bestimmen eines zweiten Pfads (10), welcher dem ersten Pfad (9) entspricht, wenn das besagte bestimmte virtuelle Netzwerk (3) dem virtuellen Supernetzwerk (2) entspricht,
- Übertragen der Pakete (12) des besagten Flusses (6), ab dem N+1^{sten} Paket, über den besagten zweiten Pfad (10).

2. Verfahren nach Anspruch 1, wobei der Schritt des Bestimmens eines ersten Pfads (9) einen Schritt der Überprüfung der Verfügbarkeit des besagten erstens Pfads (9) für die Übertragung der ersten N Pakete (11) umfasst.

3. Verfahren nach Anspruch 2, wobei die Schritte nach dem Schritt des Bestimmens eines ersten Pfads (9) durch einen Schritt des Verwerfens des besagten Flusses (6) ersetzt werden, wenn die Verfügbarkeit nicht überprüft wird.

4. Verfahren nach einem beliebigen der Ansprüche 1 bis 3, wobei der Schritt des Bestimmens eines zweiten Pfads (10) einen Schritt des Überprüfens der Verfügbarkeit des besagten zweiten Pfads (10) für die Übertragung der Pakete (12) des besagten Flusses (6), ab dem N+1^{sten} Paket, umfasst.

5. Verfahren nach Anspruch 4, wobei die Schritte nach dem Schritt des Bestimmens eines zweiten Pfads (10) durch einen Schritt des Verwerfens des besagten Flusses (6) ersetzt werden, wenn die Verfügbarkeit nicht überprüft wird.

6. Verfahren nach Anspruch 4, wobei, wenn die Verfügbarkeit nicht im Schritt des Bestimmens eines zweiten Pfads (10) geprüft wird, der besagte Schritt durch einen Schritt des Bestimmens eines zweiten Pfads (10) über ein anderes virtuelles Netzwerk ersetzt wird.

7. Verfahren nach Anspruch 6, wobei das besagte andere virtuelle Netzwerk ein einer Klasse mit weniger strengen QoS-Constraints zugeordnetes virtuelles Netzwerk ist.

8. Verfahren nach einem beliebigen der Ansprüche 2 bis 7, wobei die Überprüfung der Verfügbarkeit exakt oder wahrscheinlichkeitstheoretisch ist.

9. Verfahren nach einem beliebigen der Ansprüche 1 bis 8, wobei die Schritte nach dem Schritt des Übertragens über den besagten ersten Pfad abgebrochen oder annulliert werden, wenn der Fluss (6) endet.

## Revendications

1. Procédé pour contrôler l'admission et attribuer une ressource aux flux de trafic entrants, sans aucune connaissance à priori concernant le flux de trafic entrant, dans un réseau de communication de données (1) virtualisé de sorte à comprendre des réseaux virtuels personnalisés (2, 3) dont chacun est dédié à au moins une classe de QoS spécifique, comprenant un super réseau virtuel (2) dédié à la classe ayant les contraintes de QoS les plus strictes, et au moins un autre réseau virtuel (3), ***ledit procédé comprenant*** les étapes suivantes :
- à l'arrivée d'un flux (6), destiné à être acheminé entre un noeud d'entrée (7) et un noeud de sortie (8), déterminer un premier chemin (9) entre ledit noeud d'entrée (7) et ledit noeud de sortie (8) sur ledit super réseau virtuel (2),
- déterminer une classe de QoS dudit flux (6) en analysant les N premiers paquets (11) dudit flux (6),
- transmettre lesdits N premiers paquets (11) dudit flux (6) sur ledit premier chemin (9) à travers ledit super réseau virtuel (2),
- déterminer un réseau virtuel (3) dédié à ladite classe de QoS déterminée dudit flux (6),
- déterminer un deuxième chemin (10) entre ledit noeud d'entrée (7) et ledit noeud de sortie (8) sur ledit réseau virtuel (3) déterminé si ledit réseau virtuel (3) déterminé est différent du super réseau virtuel (2), ou
- déterminer un deuxième chemin (10) égal au premier chemin (9) si ledit réseau virtuel (3) déterminé est égal au super réseau virtuel (2),
- transmettre les paquets (12) dudit flux (6), à partir du paquet N+1, sur ledit deuxième chemin (10).

2. Procédé selon la revendication 1, dans lequel l'étape de détermination d'un premier chemin (9) comprend une étape de vérification de la disponibilité dudit premier chemin (9) pour transmettre les N premiers paquets (11).

3. Procédé selon la revendication 2, dans lequel les étapes après l'étape de détermination d'un premier chemin (9) sont remplacées par une étape de rejet dudit flux (6) si la disponibilité n'est pas vérifiée.

4. Procédé selon l'une quelconque des revendications 1 à 3, dans lequel l'étape de détermination d'un deuxième chemin (10) comprend une étape de vérification de la disponibilité dudit deuxième chemin (10) pour transmettre les paquets (12) dudit flux (6), à partir du paquet N+1.

5. Procédé selon la revendication 4, dans lequel les étapes après l'étape de détermination d'un deuxième chemin (10) sont remplacées par une étape de rejet dudit flux (6) si la disponibilité n'est pas vérifiée.

6. Procédé selon la revendication 4, dans lequel si la disponibilité n'est pas vérifiée dans l'étape de détermination d'un deuxième chemin (10), remplacer ladite étape par une étape de détermination d'un deuxième chemin (10) sur un autre réseau virtuel.

7. Procédé selon la revendication 6, dans lequel ledit autre réseau virtuel est un réseau virtuel dédié à une classe ayant des contraintes de QoS moins strictes.

8. Procédé selon l'une quelconque des revendications 2 à 7, dans lequel la vérification de la disponibilité est exacte ou probabiliste.

9. Procédé selon l'une quelconque des revendications 1 à 8 où les étapes après l'étape de transmission sur ledit premier chemin sont arrêtées ou annulées lorsque le flux (6) se termine.
